# EUROPEAN PATENT APPLICATION

(11) **EP 4 845 127 A1**
(43) Date of publication of application: **25.11.2026**
(21) Application number: 25752314.2
(22) Date of filing: 24.01.2025
(51) Int. Cl.: H04L 67/141, H04W 76/11, H04B 10/114, H04L 61/5007, H04W 84/12, H04L 101/375

(54) **ELECTRONIC DEVICE, EXTERNAL DEVICE, AND METHOD FOR OPERATING ELECTRONIC DEVICE AND EXTERNAL DEVICE**

(30) Priority: 05.02.2024 KR 20240017536
(71) Applicant: Samsung Electronics Co., Ltd., Suwon-si, Gyeonggi-do 16677 (KR)
(72) Inventor: SON, Hoyong, Suwon-si, Gyeonggi-do 16677 (KR); KANG, Youngsoo, Suwon-si, Gyeonggi-do 16677 (KR); KANG, Jieun, Suwon-si, Gyeonggi-do 16677 (KR); KIM, Geon, Suwon-si, Gyeonggi-do 16677 (KR); MIN, Kyoungsuk, Suwon-si, Gyeonggi-do 16677 (KR); PARK, Kwanyong, Suwon-si, Gyeonggi-do 16677 (KR); PARK, Hyunjun, Suwon-si, Gyeonggi-do 16677 (KR)
(74) Representative: Appleyard Lees IP LLP
(86) International application number: PCT/KR2025/001403
(87) International publication number: WO 2025/170266

(57) **Abstract**

An electronic device includes a communication unit comprising communication circuitry, a memory storing at least one instruction, and at least one processor, comprising processing circuitry, individually and/or collectively, configured to execute the at least one instruction stored in the memory and to control the electronic device to: receive an infrared (IR) signal from an external device via the communication unit, obtain first network information from the **IR** signal, generate network configuration information, based on the first network information and second network information stored in the electronic device, and connect the electronic device to the external device via a network using the network configuration information.

## Description

### Technical Field

The disclosure relates to an electronic device, an external device, and operation methods of the electronic device and the external device, and for example, to an electronic device and an external device that connect to a network using an infrared (IR) signal, and operation methods of the electronic device and the external device.

### Background Art

Manufacturers of electronic devices inspect their products for defects before releasing them to the market. For product inspection, a personal computer (PC) is placed on a production line for inspecting products, and when the PC transmits an inspection command to a product that is an electronic device, the product performs inspection and transmits an inspection result to the PC.

Before performing the inspection, the PC and the product need to be connected to each other via a communication network. In order to connect the product to the PC, pre-setting is required depending on a type of a connection interface. Among available several connection interfaces, a WiFi connection may be used which does not require a physical connection and has relatively high data transfer rates.

### Disclosure of Invention

### Solution to Problem

An electronic device according to an example embodiment of the disclosure may include a communication unit comprising communication circuitry, a memory storing at least one instruction, and at least one processor, comprising processing circuitry, individually and/or collectively, configured to execute the at least one instruction stored in the memory.

In an example embodiment of the disclosure, at least one processor, individually and/or collectively, may be configured to receive an infrared (IR) signal from an external device.

In an example embodiment of the disclosure, at least one processor may be configured to obtain first network information from the IR signal.

In an example embodiment of the disclosure, at least one processor may be configured to generate network configuration information, based on the first network information and second network information stored in the electronic device.

In an example embodiment of the disclosure, at least one processor may be configured to connect the electronic device to the external device via a network using the network configuration information.

### Brief Description of Drawings

The above and other aspects, features and advantages of certain embodiments of the present disclosure will be more apparent from the following detailed description, taken in conjunction with the accompanying drawings, in which:
FIG. 1 is a diagram illustrating an example in which an inspection device and a product are connected to a network;
FIG. 2 is a block diagram illustrating an example configuration of an electronic device and an external device operating according to various embodiments;
FIG. 3 is a diagram illustrating an example format of an infrared (IR) signal according to various embodiments;
FIG. 4 is a block diagram illustrating an example configuration of an external device and an electronic device, according to various embodiments;
FIG. 5 is a diagram illustrating an example in which an external device and an electronic device are connected to a network, according to various embodiments;
FIG. 6 is a diagram illustrating an example in which an external device transmits information to an electronic device using an IR signal, according to various embodiments;
FIG. 7 is a diagram illustrating an example in which an electronic device transmits information to an external device using an IR signal, according to various embodiments;
FIG. 8 is a diagram illustrating an example in which an electronic device generates network configuration information by receiving an extended IR signal from an external device, according to various embodiments;
FIG. 9 is a flowchart illustrating an example method of operating an electronic device, according to various embodiments;
FIG. 10 is a flowchart illustrating an example method of operating an electronic device, according to various embodiments;
FIG. 11 is a flowchart illustrating an example method of operating an external device, according to various embodiments.

### Mode for the Invention

An external device according to an example embodiment of the disclosure may include a communication unit comprising communication circuitry, a memory storing at least one instruction, and at least one processor, comprising processing circuitry, individually and/or collectively, configured to execute the at least one instruction stored in the memory. In an example embodiment of the disclosure, at least one processor, individually and/or collectively, may be configured to control the external device to transmit an IR signal including first network information to an electronic device.

The first network information may include a type identification signal and detailed information corresponding to the type identification signal.

In an example embodiment of the disclosure, at least one processor, individually and/or collectively, may be configured to connect the external device to the electronic device via a network in response to the electronic device requesting a network connection using network configuration information generated based on the first network information and second network information stored in the electronic device.

In an example embodiment of the disclosure, the network configuration information may include an Internet Protocol (IP) address of the electronic device.

A method of operating an electronic device, according to an example embodiment of the disclosure, may include receiving an IR signal from an external device.

In an example embodiment of the disclosure, the method of operating the electronic device may include obtaining first network information from the IR signal.

In an example embodiment of the disclosure, the method of operating the electronic device may include generating network configuration information, based on the first network information and second network information prestored in the electronic device.

In an example embodiment of the disclosure, the method of operating the electronic device may include connecting to the external device via a network using the network configuration information.

A method of operating an external device, according to an example embodiment of the disclosure, may include transmitting an IR signal including first network information to an electronic device. The first network information may include a type identification signal and detailed information corresponding to the type identification signal.

In an example embodiment of the disclosure, the method of operating the external device may include connecting to the electronic device via a network in response to the electronic device requesting a network connection using network configuration information generated based on the first network information and second network information prestored in the electronic device.

The network configuration information may include an IP address of the electronic device.

The external device and the electronic device may share the second network information.

The second network information may include at least one of an IP range, service set identifier (SSID) information of an access point (AP), channel information, or a port range.

A recording medium according to an embodiment of the disclosure may include a non-transitory computer-readable recording medium having recorded thereon a program for performing on a computer an operation method of an electronic device, which includes receiving an IR signal from an external device.

In an example embodiment of the disclosure, the recording medium may be a non-transitory computer-readable recording medium having recorded thereon a program for performing on the computer the operation method of the electronic device, which includes obtaining first network information from the IR signal.

In an example embodiment of the disclosure, the recording medium may be a non-transitory computer-readable recording medium having recorded thereon a program for performing on the computer the operation method of the electronic device, which includes generating network configuration information, based on the first network information and second network information prestored in the electronic device.

In an example embodiment of the disclosure, the recording medium may be a non-transitory computer-readable recording medium having recorded thereon a program for performing on the computer the operation method of the electronic device, which includes connecting to the external device via a network using the network configuration information.

Throughout the disclosure, the expression "at least one of a, b or c" may indicate only a, only b, only c, both a and b, both a and c, both b and c, all of a, b, and c, or variations thereof.

Embodiments of the disclosure will be described more fully hereinafter with reference to the accompanying drawings. However, the disclosure may have different forms and should not be construed as being limited to the various embodiments set forth herein.

The terms used herein are general terms currently widely used in the art based on functions described in the disclosure, but may refer to various other terms according to the intention of skilled persons in the art, precedent cases, advent of new technologies, etc. Thus, the terms used herein should be defined not by simple appellations thereof but based on the meaning of the terms together with the overall description of the disclosure.

The terms used herein are used to describe various example embodiments of the disclosure, and are not intended to limit the disclosure.

Throughout the disclosure, it will be understood that when a part is referred to as being "connected" or "coupled" to another part, the part may be directly connected to or electrically coupled to the other part with one or more intervening elements therebetween.

The use of the terms "the" and similar referents used in the disclosure, especially in the following claims, are to be understood to cover both the singular and the plural. Furthermore, operations of a method according to the disclosure described herein may be performed in any suitable order unless clearly specified herein. The disclosure is not limited to the described order of the operations.

Expressions such as "in some embodiments of the disclosure" or "in an embodiment of the disclosure" described in various parts of this disclosure do not necessarily refer to the same embodiment(s) of the disclosure.

Various embodiments of the disclosure may be described in terms of functional block components and various processing operations. Some or all of such functional blocks may be implemented by any number of hardware and/or software components that execute specific functions. For example, functional blocks of the disclosure may be implemented by one or more microprocessors or by circuit components for performing certain functions. Furthermore, for example, functional blocks according to the disclosure may be implemented with various programming or scripting languages. The functional blocks may be implemented using various algorithms executed on one or more processors. Furthermore, the disclosure may employ techniques of the related art for electronics configuration, signal processing, and/or data processing. Terms such as "mechanism", "element", "means", and "configuration" may be used in a broad sense and are not limited to mechanical or physical components.

Connecting lines or connectors shown in various figures are intended to represent example functional connections and/or physical or logical couplings between components in the figures. In an actual device, connections between components may be represented by many alternative or additional functional relationships, physical connections, or logical connections.

As used herein, the term "unit" or "module" indicates a unit for processing at least one function or operation and may be implemented using hardware or software or a combination of hardware and software.

As used herein, the term "user" refers to a person who uses an electronic device, and may include a consumer, an evaluator, a viewer, an administrator, or an installation engineer.

Hereinafter, the disclosure is described in greater detail with reference to the accompanying drawings.

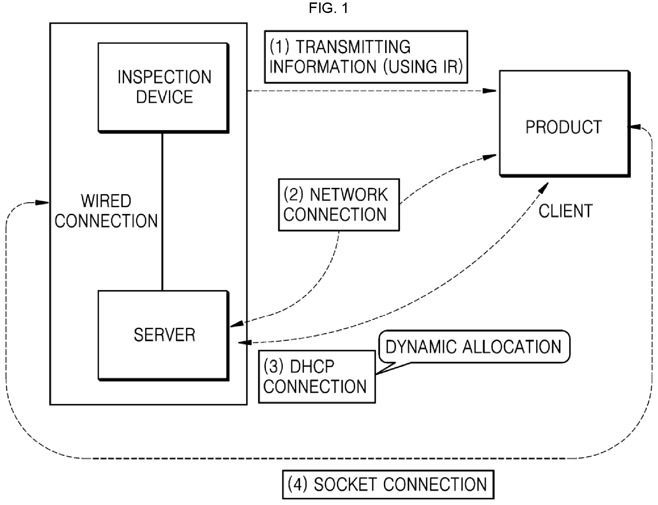

FIG. 1 is a diagram illustrating an example in which an inspection device and a product are connected to a network.

Referring to FIG. 1, the inspection device may transmit information used for network connection to the product using an IR signal. For example, the inspection device may transmit service set identifier (SSID), channel information, and an inspection device Internet Protocol (IP) to the product. The SSID may refer to the name of an access point (AP), and the channel information indicates a communication channel used by the AP.

The product may receive, via the IR signal, the information used for network connection from the inspection device.

The product may request a connection from an AP with a specific name and a specific communication channel using the SSID and channel information received via the IR signal. The AP may be connected to the product by receiving the connection request from the product. Connecting the product to the AP may refer, for example, to the product being connected to a network.

The product connected to the network needs an IP address to communicate with other devices on the same network, e.g., an inspection personal computer (PC).

After being connected to the network, the product may transmit a Dynamic Host Configuration Protocol (DHCP) request message to a server.

The server may be a DHCP server that is connected to the inspection device by wire and performs DHCP functions. The server may be integrated into or connected to the AP.

The DHCP request message may be a message requesting allocation of an IP address. The DHCP request message may be broadcast to all devices on the network.

The DHCP may refer to a network protocol that automatically assigns IP addresses to devices connected to the network. The server may transmit a DHCP response containing the IP address to the product using a home router or router.

The server may receive the DHCP request message transmitted by the product and find an IP address that is to be assigned to the product. The server may use the DHCP to assign a dynamic IP address, a subnet mask (or SM), default gateway (or DG) information, and a domain name system (DNS) to the product.

The server may respond to the product with a DHCP offer message. The DHCP offer message may include information about the IP address, subnet mask, default gateway information, and DNS that are assigned to the product.

The product may request a socket connection from the server using the IP address, subnet mask, default gateway information, DNS, etc. assigned by the server.

When the socket connection request from the product is valid, the inspection device may accept the socket connection request to connect with the product, and start communicating with the product using a socket.

In an environment where the inspection device connects to a plurality of products through a network, inspect the products, and then disconnects from the products, it is necessary to make the network connection between the inspection device and the products faster and easier.

However, as shown in FIG. 1, when the server assigns an IP address to the product using DHCP, a series of operations need to be performed according to the DHCP standard, which is time-consuming.

When the product to be inspected is a display device including a plurality of panels, such as a video wall device, each of the plurality of panels needs to be connected to the network because inspection for each of the plurality of panels is required. In this case, each of the plurality of panels requests an IP address from the server, which may generate broadcast traffic on the network due to an increase in data volume and resulting processing time delay. These issues may affect overall network performance, especially in small-scale networks.

Because DHCP relies on servers to assign IP addresses to products, the DHCP may be less reliable and less secure than static IP addressing.

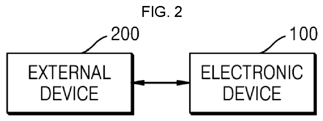

FIG. 2 is a block diagram illustrating an example configuration of an electronic device 100 and an external device 200 operating, according to various embodiments.

In an embodiment of the disclosure, the electronic device 100 may be an electronic product to be inspected.

In an embodiment of the disclosure, the electronic device 100 may be implemented as various forms of electronic devices capable of communicating with the external device 200.

For example, the electronic device 100 may include at least one of a television (TV), a desktop, a smartphone, a tablet PC, a mobile phone, a video phone, an e-book reader, a laptop PC, a netbook computer, a digital camera, a personal digital assistant (PDA), a portable multimedia player (PMP), a camcorder, a navigation device, a wearable device, a smart watch, a home network system, a security system, or a medical device, but is not limited thereto.

In an embodiment of the disclosure, the external device 200 may refer to an electronic device that inspects the electronic device 100, and may be implemented as various forms of computer devices. For example, and without limitation, the external device 200 may be a PC, a smartphone, or the like.

In an embodiment of the disclosure, the external device 200 may be connected to an AP.

For example, the external device 200 may be connected to the AP via a wired cable.

In an embodiment of the disclosure, the external device 200 and the electronic device 100 may mutually pre-agree upon using prefix data .

In an embodiment of the disclosure, the external device 200 and the electronic device 100 may share prefix data to generate network configuration information.

In the field of networking, prefix data may be a prefix placed before a word or number. The prefix data may play a crucial role in addressing and variable naming conventions. Using the prefix data allows efficient management and identification of data structures and prevents/reduces address conflicts in network communications.

In an embodiment of the disclosure, the prefix data mutually agreed upon by the external device 200 and the electronic device 100 may include information that the external device 200 and the electronic device 100 mutually share with each other in order to connect via a network, and may include at least one of an IP range, SSID information of an AP, channel information, or a port range.

The IP range may represent a range of IP addresses. An IP address is a concept for representing an address of a specific electronic device connected to a network and may be used to identify which computer on which network the electronic device is.

An IP address may be expressed as a series of numbers. An electronic device connected to the Internet are generally identified by four groups of numbers according to an IP addressing system. The IP addressing system using the four groups of numbers is referred to as IP version 4 (IPv4).

When each of the four groups representing an IP address is called a class, the IP address may be represented by four classes, e.g., A class, B class, C class, and D class. Here, when at least one of the A class, B class, or C class changes, the IP range changes.

SSID may be understood as a service set identifier and represents a unique name of an AP. The SSID may be a name of a Wi-Fi network including letters, numbers, and symbols.

Port numbers may be used to differentiate between applications/processors within IP. A port number may be combined with an IP address and used by a corresponding protocol. A port number may range from 0 to 65535.

In an embodiment of the disclosure, prefix data mutually agreed upon by the external device 200 and the electronic device 100 may be prestored in a memory or storage or software module of each of the external device 200 and the electronic device 100.

The external device 200 and the electronic device 100 may receive prefix data settings to be used by the external device 200 and the electronic device 100 through user settings, or preset prefix data may be changed.

However, the disclosure is not limited thereto, and the external device 200 and the electronic device 100 may mutually share and use prefix data using various methods.

In an embodiment of the disclosure, the external device 200 and the electronic device 100 may pre-agree upon an IP range, SSID information, channel information, and port range to be used.

For example, the external device 200 and the electronic device 100 may agree on the IP range to be used as 192.168.0.X, the SSID information of the AP as wififactory, and the port in a range of 5000 to 5100.

In an embodiment of the disclosure, the external device 200 may exclude an IP area to be allocated by the external device 200 from a DHCP area.

The AP may automatically assign an IP address in the DHCP area. The DHCP area refers to a range of IP addresses that may be automatically assigned using a DHCP protocol.

When the AP automatically assigns an IP address to a device connected to the network, e.g., the electronic device 100, using DHCP, there is a possibility that the IP address assigned using the DHCP may be outside of the IP range pre-agreed upon between the external device 200 and the electronic device 100.

For example, when the IP range mutually agreed upon by the external device 200 and the electronic device 100 is 192.168.0.X, there may be a possibility that the AP may assign an IP address in an area different from the agreed IP range using DHCP.

In an embodiment of the disclosure, the external device 200 may cause the AP to exclude from the DHCP area an IP area mutually agreed upon by the external device 200 and the electronic device 100, e.g., the IP range of 192.168.0.X in the above example.

In an embodiment of the disclosure, the external device 200 may determine an IP address of the electronic device 100. For example, in the disclosure, DHCP does not assign the IP address of the electronic device 100, but the external device 200 may assign the IP address of the electronic device 100.

In an embodiment of the disclosure, the external device 200 may determine a port number in addition to the IP address of the electronic device 100. The port number may be a number indicating a path through which the electronic device 100 indicated by the IP address may be accessed.

In an embodiment of the disclosure, the external device 200 may include network information in an IR signal and transmit the IR signal to the electronic device 100.

In an embodiment of the disclosure, the network information may be information used to generate network configuration information.

In an embodiment of the disclosure, the network configuration information may include at least one of an external device IP, an electronic device IP, a subnet mask, a default gateway, a DNS, an SSID, or a channel index.

In an embodiment of the disclosure, the network information may be used to generate network configuration information regarding at least one of SSID information, channel information, external device IP information, electronic device IP information, or port information among pieces of network configuration information.

In an embodiment of the disclosure, the external device 200 may include an IR transmitter unit for transmitting an IR signal. When the external device 200 is a PC, the IR transmitter unit may be mounted on the PC or connected to the PC. The IR transmitter unit may include an IR remote control or an IR transmitter.

In an embodiment of the disclosure, the external device 200 may transmit an IR signal including network information to the electronic device 100 via an IR remote control or an IR transmitter.

In an embodiment of the disclosure, the IR transmitter unit may include an IR blaster. The IR blaster is a cable that performs a function of extending the IR transmitter unit and may emit IR signals.

In an embodiment of the disclosure, the external device 200 may transmit the IR signal including the network information to the electronic device 100 using the IR transmitter unit.

The network information that is information included in the IR signal transmitted by the external device 200 to the electronic device 100 and may be used to generate network configuration information may be referred to as first network information.

In an embodiment of the disclosure, the first network information may include a type identification signal and detailed information.

In an embodiment of the disclosure, the detailed information included in the first network information may include information corresponding to the type identification signal and may be data of a type identified by the type identification signal.

In an embodiment of the disclosure, the type identification signal may be information indicating a type of network configuration information. The type identification signal may indicate what type of network configuration information the detailed information transmitted with the type identification signal is for.

In an embodiment of the disclosure, the type identification signal may identify at least one of an SSID, a channel index, an external device IP, an electronic device IP, or a port number.

In an embodiment of the disclosure, the type identification signal may be one of a basic type identification signal and an extended type identification signal.

In an embodiment of the disclosure, a basic type identification signal may indicate that the detailed information transmitted with the basic type identification signal is included in a data range mutually agreed upon by the electronic device 100 and the external device 200.

In an embodiment of the disclosure, an extended type identification signal may indicate that detailed information transmitted with the extended type identification signal is outside a data range mutually agreed upon by the electronic device 100 and the external device 200.

In an embodiment of the disclosure, the external device 200 may generate an extended IR signal to transmit, to the electronic device 100, data that is outside a range of prefix data mutually agreed upon with the electronic device 100.

In an embodiment of the disclosure, the extended IR signal may be an IR signal that includes an extended type identification signal and detailed information corresponding to the extended type identification signal.

In an embodiment of the disclosure, unlike the extended IR signal, an IR signal including a basic type identification signal and corresponding detailed information may be referred to as a basic IR signal.

In an embodiment of the disclosure, to transmit data that is outside the mutually agreed range of the prefix data to the electronic device 100, the external device 200 may transmit, to the electronic device 100, the extended IR signal including the extended type identification signal and the detailed information corresponding to the extended type identification signal.

In an embodiment of the disclosure, the electronic device 100 may receive an IR signal from the external device 200.

In an embodiment of the disclosure, the electronic device 100 may obtain first network information from the IR signal received from the external device 200.

In an embodiment of the disclosure, the electronic device 100 may obtain a type identification signal and detailed information as the first network information.

In an embodiment of the disclosure, the electronic device 100 may obtain prefix data. The prefix data may be information that the external device 200 and the electronic device 100 share with each other in order to connect via a network.

In an embodiment of the disclosure, prefix data mutually agreed upon by the electronic device 100 and the external device 200 may be prestored in an internal software module of the memory or processor of the electronic device 100.

Information prestored in the electronic device 100 and shared in advance between the external device 200 and the electronic device 100 to be connected via the network is referred to as second network information.

In an embodiment of the disclosure, the second network information may be information prestored in the electronic device 100 and used to generate network configuration information.

In an embodiment of the disclosure, the second network information may include prefix data for each type. Prefix data for each type may be prefix data corresponding to each type of network configuration information.

In an embodiment of the disclosure, the electronic device 100 may generate network configuration information, based on first network information and second network information.

In an embodiment of the disclosure, when the electronic device 100 receives a basic IR signal, e.g., when a type identification signal included in the first network information is a basic type identification signal, the electronic device 100 may combine detailed information corresponding to the basic type identification signal with prefix data for the same type included in the second network information.

In an embodiment of the disclosure, the electronic device 100 may receive an extended IR signal. In an embodiment of the disclosure, the first network information included in the extended IR signal may include an extended type identification signal.

In an embodiment of the disclosure, when receiving an extended IR signal, the electronic device 100 may generate extended data using the extended IR signal and a basic IR signal together.

In an embodiment of the disclosure, the electronic device 100 may use, together with the extended IR signal, a basic IR signal including a basic type identification signal that identifies the same type as a type indicated by the extended type identification signal included in the extended IR signal.

In an embodiment of the disclosure, the electronic device 100 may obtain extended data using detailed information corresponding to the extended type identification signal included in the extended IR signal, together with detailed information corresponding to the basic type identification signal of the same type as the extended type identification signal.

In an embodiment of the disclosure, the electronic device 100 may generate network configuration information using the extended data, and connect with the external device 200 using the generated network configuration information.

In an embodiment of the disclosure, the electronic device 100 may be connected to the external device 200 based on a static IP address using the network configuration information.

In an embodiment of the disclosure, when connection with the electronic device 100 is completed, the external device 200 may stop transmitting an IR signal to the electronic device 100.

According to the various embodiments of the disclosure, the external device 200 may easily set a static IP address by transmitting a minimum IR signal to the electronic device 100. Because a static IP address is an IP address that is assigned to a device and remains constant, unlike a dynamic IP address that changes each time the device connects to the Internet, the use of the static IP address allows for more consistent and stable network setup between the electronic device 100 and the network.

In addition, according to an embodiment of the disclosure, a DHCP process may be omitted, which may speed up network connection setup.

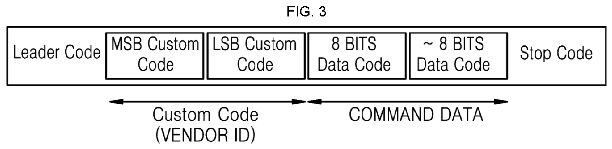

FIG. 3 is a diagram illustrating an example format of an IR signal according to various embodiments.

An IR signal may have a certain format with a preset sequence.

Referring to FIG. 3, the IR signal may include a leader code, a custom code, command code (command data), and a stop code.

The leader code may be a signal notifying the beginning of a remote control signal.

The custom code may represent information about a business address. The custom code may be used to identify vendors and products.

The command data (the command code) may include a data code indicating a specific function and may include two bytes. Among the two bytes included in the command data, a first byte may be referred to as a header, and a second byte may be referred to as a body. The two bytes included in the command data may each include 8 bits, and each bit may be represented as one of the values 0 and 1.

The stop code may include a signal notifying the end of data transmission and has an IR transmission waveform with a continuous period of time.

IR signaling is a form of asynchronous serial communication allowing the IR signal to convey information via control using timing.

In an embodiment of the disclosure, the command data in the IR signal may include first network information. In an embodiment of the disclosure, the first network information may include a type identification signal and detailed information corresponding to the type identification signal.

In an embodiment of the disclosure, the external device 200 may include a type identification signal in the header of the command data included in the IR signal and include detailed information corresponding to the type identification signal in the body.

In an embodiment of the disclosure, the type identification signal is information for identifying at least one of an SSID, a channel index, an external device IP, an electronic device IP, or a port number, and may be represented as an identifier indicating each type.

In an embodiment of the disclosure, the detailed information corresponding to the type identification signal included in the first network information may be included in the second byte of the command data in the IR signal. In an embodiment of the disclosure, the detailed information may be data of a type identified by the type identification signal. For example, the detailed information may be data used to complete network configuration information such as the SSID, channel index, external device IP, electronic device IP, port number, etc.

In an embodiment of the disclosure, the electronic device 100 may receive an IR signal from the external device 200 and obtain first network information from the IR signal.

In an embodiment of the disclosure, the electronic device 100 may obtain a type identification signal from a header of command code/data included in the IR signal, and obtain detailed information corresponding to the type identification signal from a body thereof.

In an embodiment of the disclosure, the electronic device 100 may generate network configuration information using the first network information in conjunction with second network information prestored in the electronic device 100, and connect with the external device 200 using the network configuration information.

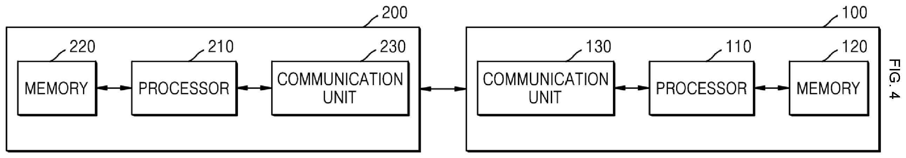

FIG. 4 is a block diagram illustrating an example configuration of the external device 200 and the electronic device 100, according to various embodiments.

Referring to FIG. 4, the external device 200 and the electronic device 100 may be connected via a communication network.

The external device 200 is described first.

According to an embodiment of the disclosure, the external device 200 may include a processor (e.g., including processing circuitry) 210, a memory 220, and a communication unit (e.g., including communication circuitry) 230.

According to an embodiment of the disclosure, the memory 220 may store at least one instruction. The memory 220 may store at least one program executed by the processor 210. The memory 220 may store predefined operation rules or programs. The memory 220 may also store data input to or output from the external device 200.

In an embodiment of the disclosure, prefix data mutually agreed upon by the external device 200 and the electronic device 100 may be stored in the memory 220. In an embodiment of the disclosure, the prefix data is information that the external device 200 and the electronic device 100 share with each other to connect via a network, and may be referred to as second network information in the disclosure.

In an embodiment of the disclosure, the second network information may include at least one of an IP range, SSID information of an AP, channel information, or a port range.

In an embodiment of the disclosure, the second network information mutually agreed between the external device 200 and the electronic device 100 may be prestored in the memory 220 or the processor 210 of the external device 200.

The memory 220 may include at least one type of storage medium, e.g., at least one of a flash memory-type memory, a hard disk-type memory, a multimedia card micro-type memory, a card-type memory (e.g., a secure digital (SD) card or an extreme digital (XD) memory), random access memory (RAM), static RAM (SRAM), read-only memory (ROM), electrically erasable programmable ROM (EEPROM), PROM, a magnetic memory, a magnetic disc, or an optical disc.

In an embodiment of the disclosure, the memory 220 may store one or more instructions for generating an IR signal including first network information.

In an embodiment of the disclosure, the memory 220 may store one or more instructions for transmitting IR information including the first network information to the electronic device 100.

In an embodiment of the disclosure, the memory 220 may store one or more instructions for connecting with the electronic device 100 via the network in response to the electronic device 100 requesting a network connection using network configuration information generated based on the first network information and the second network information prestored in the electronic device 100.

In an embodiment of the disclosure, the memory 220 may store one or more instructions for controlling an AP connected to the external device 200.

In an embodiment of the disclosure, the memory 220 may store one or more instructions for controlling the AP to exclude the IP range included in the second network information from a DHCP area.

According to an embodiment of the disclosure, the processor 210 may include various processing circuitry and controls all operations of the external device 200. According to an embodiment of the disclosure, the processor 210 may control a flow of signals between the internal components of the external device 200 and performs a function of processing data.

In an embodiment of the disclosure, the processor 210 may control the external device 200 to function by executing one or more instructions stored in the memory 220.

In an embodiment of the disclosure, the processor 210 may include a single core, a dual core, a triple core, a quad core, or a number of cores equal to multiples thereof.

In an embodiment of the disclosure, the processor 210 may be configured as a single processor or a plurality of processors. For example, the processor 210 may include a plurality of processors. In this case, the processor 210 may be implemented as a main processor or a sub processor.

Furthermore, the processor 120 may include at least one of a central processing unit (CPU), a graphics processing unit (GPU), or a video processing unit (VPU). Alternatively, in an embodiment of the disclosure, the processor 210 may be implemented in the form of a system on chip (SoC) incorporating at least one of a CPU, a GPU, or a VPU. Alternatively, in an embodiment of the disclosure, the processor 210 may further include a neural processing unit (NPU).

The processor 210 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In an embodiment of the disclosure, the at least one processor 210 may generate an IR signal including first network information.

In an embodiment of the disclosure, the at least one processor 210 may transmit IR information including the first network information to the electronic device 100.

In an embodiment of the disclosure, the at least one processor 210 may connect the external device 200 to the electronic device 100 via the network in response to the electronic device 100 requesting a network connection using network configuration information generated based on the first network information and the second network information.

In an embodiment of the disclosure, the at least one processor 210 may control an AP connected to the external device 200.

In an embodiment of the disclosure, the at least one processor 210 may control the AP to exclude the IP range included in the second network information from a DHCP area.

The electronic device 100 is now described.

According to an embodiment of the disclosure, the electronic device 100 may include a processor (e.g., including processing circuitry) 110, a memory 120, and a communication unit (e.g., including communication circuitry) 130.

According to an embodiment of the disclosure, the memory 120 may store at least one instruction. The memory 120 may store at least one program executed by the processor 110. The memory 120 may store predefined operation rules or programs. The memory 120 may also store data input to or output from the electronic device 100.

In an embodiment of the disclosure, prefix data mutually agreed upon by the external device 200 and the electronic device 100 may be stored in the memory 120. The prefix data may be referred to as second network information.

In an embodiment of the disclosure, the second network information mutually agreed between the external device 200 and the electronic device 100 may be prestored in the memory 120 or the processor 110 of the electronic device 100.

The memory 120 may include at least one type of storage medium, e.g., at least one of a flash memory-type memory, a hard disk-type memory, a multimedia card micro-type memory, a card-type memory (e.g., an SD card or an XD memory), RAM, SRAM, ROM, EEPROM, PROM, a magnetic memory, a magnetic disc, or an optical disc.

In an embodiment of the disclosure, the memory 120 may store one or more instructions for receiving an IR signal from the external device 200.

In an embodiment of the disclosure, the memory 120 may store one or more instructions for obtaining first network information from the IR signal.

In an embodiment of the disclosure, the first network information may include a type identification signal and detailed information corresponding to the type identification signal.

In an embodiment of the disclosure, the type identification signal may include an identifier indicating at least one of an SSID, a channel index, an external device IP, an electronic device IP, or a port number.

In an embodiment of the disclosure, the memory 120 may store one or more instructions for reading the second network information prestored in the electronic device 100.

In an embodiment of the disclosure, the second network information may include prefix data for each type.

In an embodiment of the disclosure, the second network information may include information shared with the external device 200 and may include information about at least one of an IP range, SSID information of an AP, channel information, or a port range.

In an embodiment of the disclosure, the memory 120 may store one or more instructions for generating network configuration information based on the first network information and the second network information.

In an embodiment of the disclosure, the memory 120 may store one or more instructions for identifying whether the type identification signal obtained from the IR signal is a basic type identification signal or an extended type identification signal.

In an embodiment of the disclosure, when the type identification signal obtained from the IR signal is a basic type identification signal, the memory 120 may store one or more instructions for generating network configuration information by combining detailed information corresponding to the type identification signal included in the first network information with prefix data for a type identified by the type identification signal, which is included in the second network information.

In an embodiment of the disclosure, when the type identification signal obtained from the IR signal is an extended type identification signal rather than a basic type identification signal, the memory 120 may store one or more instructions for obtaining extended data using detailed information corresponding to the extended type identification signal, together with detailed information corresponding to a basic type identification signal of the same type as the extended type identification signal.

In an embodiment of the disclosure, the memory 120 may store one or more instructions for using the extended data as network configuration information.

In an embodiment of the disclosure, the network configuration information may include an IP address of the electronic device 100.

In an embodiment of the disclosure, the memory 120 may store one or more instructions for connecting with the external device 200 via a network using the network configuration information.

In an embodiment of the disclosure, the memory 120 may store one or more instructions for connecting with the external device 200 via the network based on a static IP address using the network configuration information.

The processor 110 may include various processing circuitry and control all operations of the electronic device 100. According to an embodiment of the disclosure, the processor 110 may control a flow of signals between the internal components of the electronic device 100 and performs a function of processing data.

In an embodiment of the disclosure, the processor 110 may control the electronic device 100 to function by executing one or more instructions stored in the memory 120.

In an embodiment of the disclosure, the processor 110 may include a single core, a dual core, a triple core, a quad core, or a number of cores equal to multiples thereof.

In an embodiment of the disclosure, the processor 110 may be configured as a single processor or a plurality of processors. For example, the processor 110 may include a plurality of processors. In this case, the processor 110 may be implemented as a main processor or a sub processor.

Furthermore, the processor 110 may include at least one of a CPU, a GPU, or a VPU. Alternatively, in an embodiment of the disclosure, the processor 110 may be implemented in the form of an SoC incorporating at least one of a CPU, a GPU, or a VPU. In an embodiment of the disclosure, the processor 110 may further include an NPU. The processor 110 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In an embodiment of the disclosure, the at least one processor 110 may receive an IR signal from the external device 200.

In an embodiment of the disclosure, the at least one processor 110 may obtain first network information from the IR signal.

In an embodiment of the disclosure, the first network information may include network information obtained from the IR signal received from the external device 200, and may be used to generate network configuration information.

In an embodiment of the disclosure, the first network information may include a type identification signal and detailed information corresponding to the type identification signal.

In an embodiment of the disclosure, the type identification signal may include an identifier indicating a type of network information, such as an SSID, a channel index, an external device IP, an electronic device IP, a port number, etc.

In an embodiment of the disclosure, the detailed information corresponding to the type identification signal is network information identified by the type identification signal, and may be used with second network information to set network configuration information.

In an embodiment of the disclosure, the detailed information may be network information corresponding to a type of at least one of the SSID, channel index, external device IP, electronic device IP, or port number.

In an embodiment of the disclosure, the at least one processor 110 may read second network information prestored in the electronic device 100.

In an embodiment of the disclosure, the second network information may be prestored in the electronic device 100 as information mutually agreed upon by the external device 200 and the electronic device 100.

In an embodiment of the disclosure, the second network information may include prefix data for each type.

In an embodiment of the disclosure, the second network information is information shared with the external device 200 and may include information about at least one of an IP range, SSID information of an AP, channel information, or a port range.

In an embodiment of the disclosure, the at least one processor 110 may generate network configuration information, based on the first network information and the second network information.

In an embodiment of the disclosure, the at least one processor 110 may identify whether the type identification signal obtained from the IR signal is a basic type identification signal or an extended type identification signal.

In an embodiment of the disclosure, when the type identification signal obtained from the IR signal is a basic type identification signal, the at least one processor 110 may generate network configuration information by combining detailed information corresponding to the type identification signal included in the first network information with prefix data for the same type, which is included in the second network information.

In an embodiment of the disclosure, the network configuration information is information for configuring the network, and may be information for a process of assigning network settings, policies, flows, and controls.

In an embodiment of the disclosure, the network configuration information may include at least one of an external device IP, an electronic device IP, a subnet mask, a default gateway, a DNS, an SSID, or a channel index.

In an embodiment of the disclosure, the electronic device 100 may be connected to the network using the network configuration information. Thereafter, the electronic device 100 may attempt to establish a connection with the external device 200 using the network configuration information, and according to approval of the connection from the external device 200, the electronic device 100 may be connected to the external device 200 through the network to perform mutual communication with the external device 200.

In an embodiment of the disclosure, when the type identification signal obtained from the IR signal is an extended type identification signal rather than a basic type identification signal, the at least one processor 110 may obtain extended data using detailed information corresponding to the extended type identification signal, together with detailed information corresponding to a basic type identification signal of the same type as the extended type identification signal.

In an embodiment of the disclosure, the at least one processor 110 may obtain network configuration information from the extended data.

In an embodiment of the disclosure, the network configuration information may include an IP address of the electronic device 100.

In an embodiment of the disclosure, the at least one processor 110 may connect the electronic device 100 to the external device 200 via the network using the network configuration information.

In an embodiment of the disclosure, the at least one processor 110 may connect the electronic device 100 to the external device 200 via the network based on a static IP address using the network configuration information.

According to an embodiment of the disclosure, the communication unit 230 included in the external device 200 and the communication unit 130 included in the electronic device 100 may include various communication circuitry and may each interconnect the external device 200 and the electronic device 100 and transmit and receive data or signals according to control by the processor 210 of the external device 200 and the processor 110 of the electronic device 100.

In an embodiment of the disclosure, the communication unit 230 included in the external device 200 and the communication unit 130 included in the electronic device 100 may each include at least one of a short-range communication module (not shown) using short-range communication technology, a wired communication module (not shown), or a mobile communication module (not shown).

The short-range communication module may include a module for short-range communication within a predetermined distance. Short-distance communication technologies may include, but are not limited to, wireless local area network (WLAN), Wi-Fi, Bluetooth, ZigBee, Wi-Fi Direct (WFD), ultra-wideband (UWB), IR communication, Bluetooth Low Energy (BLE), and near field communication (NFC).

The wired communication module may refer to a module for communication using electrical signals or optical signals, and wired communication technologies according to an embodiment of the disclosure may include pair cables, coaxial cables, optical fiber cables, Ethernet cables, etc.

The mobile communication module transmits and/or receives a wireless signal to or from at least one of a base station, an external terminal, or a server on a mobile communication network. In this case, the wireless signal may be a voice call signal, a video call signal, or data in any one of various formats for transmission and reception of a text/multimedia message.

In an embodiment of the disclosure, in order for the external device 200 to remotely inspect the electronic device 100, the external device 200 and the electronic device 100 need to be connected to each other via a wireless network.

A case in which the external device 200 and the electronic device 100 transmit and receive data through Wi-Fi communication is described as an example.

In an embodiment of the disclosure, the communication unit 230 of the external device 200 and the communication unit 130 of the electronic device 100 may transmit and receive data using a Wi-Fi network that conforms to the Wi-Fi communication standard.

In an embodiment of the disclosure, in order for the electronic device 100 and the external device 200 to perform Wi-Fi communication, the electronic device 100 needs to be assigned an AP address.

In an embodiment of the disclosure, the external device 200 may determine an IP address, a port number, etc. to be used by the electronic device 100.

In an embodiment of the disclosure, the communication unit 230 of the external device 200 and the communication unit 130 of the electronic device 100 may quickly assign an IP address or port number to the electronic device 100 by performing IR communication.

IR communication may refer, for example, to a communication method of transmitting and receiving information using IR light, and a transmitter unit and a receiver unit are required to perform the IR communication.

In an embodiment of the disclosure, the communication unit 230 of the external device 200 and the communication unit 130 of the electronic device 100 may each include a transmitter unit, a receiver unit, or a transceiver unit for performing IR communication.

The transmitter may modulate an IR signal. The transmitter unit may modulate the IR signal using various types of modulation methods, such as amplitude modulation, frequency modulation, and pulse modulation. The transmitter unit includes an IR light-emitting diode (LED) that may be used to transmit the modulated IR signal to the receiver.

The receiver unit may receive the IR signal via a photodiode and convert the IR signal into electrical energy.

In an embodiment of the disclosure, the communication unit 230 of the external device 200 may include an IR transmitter unit for transmitting an IR signal. In an embodiment of the disclosure, the IR transmitter unit may include an IR remote control or an IR transmitter.

In an embodiment of the disclosure, the communication unit 230 of the external device 200 may transmit an IR signal including first network information to the communication unit 130 of the electronic device 100.

In an embodiment of the disclosure, the electronic device 100 may receive the IR signal via the communication unit 130 and obtain the first network information from the IR signal.

In an embodiment of the disclosure, the electronic device 100 may generate network configuration information using the first network information in conjunction with prestored second network information.

In an embodiment of the disclosure, the network configuration information may include the IP address, port number, etc. of the electronic device 100.

In an embodiment of the disclosure, the communication unit 130 of the electronic device 100 may transmit the network configuration information to an AP connected to the external device 200, receive a response from the AP, and connect with the AP.

In an embodiment of the disclosure, the communication unit 130 of the electronic device 100 and the communication unit 230 of the external device 200 may be connected via the network by performing a socket connection.

The communication unit 130 of the electronic device 100 and the communication unit 230 of the external device 200 may transmit and receive data by performing Wi-Fi communication.

In an embodiment of the disclosure, when the communication connection with the electronic device 100 is completed, the external device 200 may stop transmitting an IR signal to the electronic device 100.

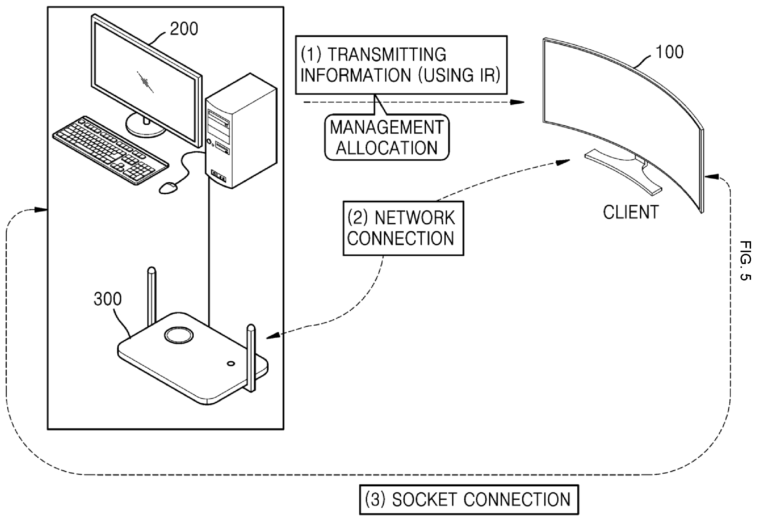

FIG. 5 is a diagram illustrating an example in which an external device 200 and an electronic device 100 are connected to a network, according to various embodiments.

In an embodiment of the disclosure, the external device 200 and the electronic device 100 may pre-agree upon an IP range, an SSID of an AP, and a port range to be used.

In an embodiment of the disclosure, the external device 200 may control an AP 300, which is connected to an external device 200 by wire, to exclude an IP area to be allocated by the external device 200 from a DHCP area.

Referring to FIG. 5, the external device 200 may convey information to the electronic device 100 using an IR signal.

In an embodiment of the disclosure, the external device 200 may include first network information used for network connection in the IR signal and transmit the IR signal to the electronic device 100.

In an embodiment of the disclosure, the first network information is information used to generate network configuration information and may include at least one of SSID information, channel information, external device IP information, electronic device IP information, or port information.

In an embodiment of the disclosure, the electronic device 100 may receive the IR signal from the external device 200.

In an embodiment of the disclosure, the electronic device 100 may generate network configuration information using the first network information obtained from the IR signal and second network information prestored in the electronic device 100.

In an embodiment of the disclosure, the network configuration information may include at least one of an external device IP address, an electronic device IP address, a subnet mask, a default gateway, a DNS, an SSID, or a channel index.

In an embodiment of the disclosure, the electronic device 100 may request a network connection from the AP 300.

In an embodiment of the disclosure, the electronic device 100 may request a connection from the AP 300 using information associated with the AP 300, e.g., SSID information and a channel index, among the network configuration information. The AP 300 may receive the connection request from the electronic device 100 and allow the electronic device 100 to connect to the network.

In an embodiment of the disclosure, the electronic device 100 may request the network connection from the AP 300 and simultaneously set its own network information using the network configuration information.

In an embodiment of the disclosure, the electronic device 100 may set its own network information using the electronic device IP address, subnet mask, default gateway, and DNS among the network configuration information.

In an embodiment of the disclosure, the electronic device 100 may attempt to establish a communication connection to the external device 200 using the set own network information.

For example, in an embodiment of the disclosure, the electronic device 100 connected to the network via the AP 300 may attempt to establish a communication connection to the external device 200 on the same network as the electronic device 100 using its own network information including the electronic device IP address.

In an embodiment of the disclosure, the external device 200 may be connected to the electronic device 100 via the network by receiving a communication connection request from the electronic device 100 and responding to the communication connection request from the electronic device 100.

In addition, in an embodiment of the disclosure, the electronic device 100 may request a socket connection from the external device 200.

In an embodiment of the disclosure, the electronic device 100 may obtain the electronic device IP address from the network configuration information, and use the electronic device IP address to request a socket connection from the external device 200.

When the socket connection request from the electronic device 100 is valid, the external device 200 may accept the socket connection request to connect with the electronic device 100, and start communicating with the electronic device 100 using a socket.

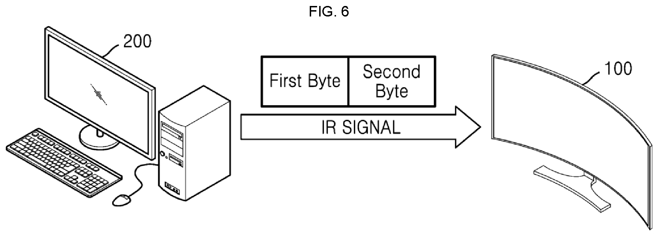

FIG. 6 is a diagram illustrating an example in which the external device 200 transmits information to the electronic device 100 using an IR signal, according to various embodiments.

In an embodiment of the disclosure, the external device 200 may include first network information in an IR signal and transmit the IR signal to the electronic device 100.

The IR signal may include command data (command code). The command data is data code that indicates a specific function and may include two bytes: a header and a body.

In an embodiment of the disclosure, the external device 200 may include the first network information in the command data of the IR signal and transmit the IR signal to the electronic device 100.

In an embodiment of the disclosure, the first network information may include a type identification signal and detailed information corresponding to the type identification signal.

In an embodiment of the disclosure, the external device 200 may include the type identification signal of the first network information in a first byte of the command data of the IR signal. In an embodiment of the disclosure, the type identification signal may be information identifying at least one of an SSID, a channel index, an external device IP, an electronic device IP, or a port number.

In an embodiment of the disclosure, the external device 200 may include, in a second byte of the command data of the IR signal, the detailed information corresponding to the type identification signal of the first network information. In an embodiment of the disclosure, the detailed information may be data of a type identified by the type identification signal. For example, the detailed information may be data used to set network configuration information such as an SSID, a channel index, an external device IP, an electronic device IP, a port number, etc.

In an embodiment of the disclosure, the electronic device 100 may receive the IR signal from the external device 200 and obtain the first network information from the IR signal.

In an embodiment of the disclosure, the electronic device 100 may obtain the type identification signal from the header (first byte) of the command code/data included in the IR signal, and obtain the detailed information corresponding to the type identification signal from the body (second byte).

In an embodiment of the disclosure, the electronic device 100 may generate network configuration information using the first network information in conjunction with second network information prestored in the electronic device 100, and connect with the external device 200 using the network configuration information.

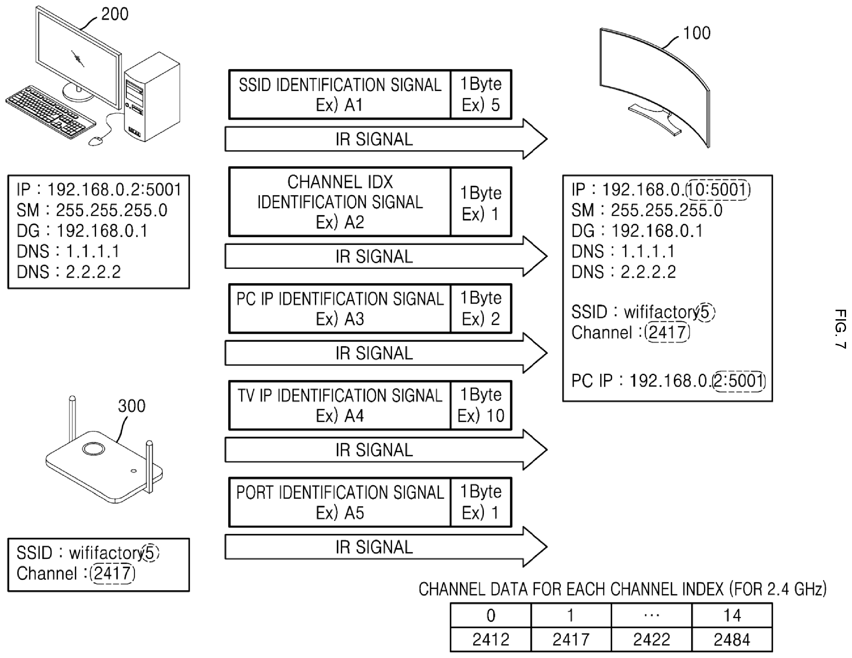

FIG. 7 is a diagram illustrating an example in which the external device 200 transmits information to the electronic device 100 using an IR signal, according to various embodiments.

It is assumed in FIG. 7 that the external device 200 is a PC and the electronic device 100 is a TV.

In an embodiment of the disclosure, the external device 200 and the electronic device 100 may pre-agree upon an IP range, SSID information, channel information, port range, etc. to be used by each other.

In an embodiment of the disclosure, the external device 200 may control the AP 300 to exclude from a DHCP area an IP area mutually agreed upon between the external device 200 and the electronic device 100.

For example, when prefix data for an IP range mutually agreed by the external device 200 and the electronic device 100 is 192.168.0.X, the external device 200 may cause the IP area 192.168.0.X mutually agreed upon between the external device 200 and the electronic device 100 to be excluded from the DHCP area.

In an embodiment of the disclosure, the external device 200 may include first network information in an IR signal and transmit the IR signal to the electronic device 100.

In an embodiment of the disclosure, the external device 200 may include a type identification signal in a first byte of two bytes included in command data of the IR signal.

In an embodiment of the disclosure, the type identification signal may identify at least one of an SSID, a channel index, an external device IP, an electronic device IP, or a port number. The type identification signal may be an identifier that indicates a type of network information.

For example, the type identification signal may be one of A1 to A5. For example, type identification signals of A1, A2, A3, A4, and A5 may include identifiers respectively indicating an SSID, a channel index, an external device IP, an electronic device IP, and a port number.

In an embodiment of the disclosure, the external device 200 may include detailed information corresponding to the type identification signal in a second byte of the two bytes included in the command data of the IR signal.

In an embodiment of the disclosure, the external device 200 may include detailed information corresponding to one of the type identification signals of A1 to A5 in the second byte of the IR signal.

In an embodiment of the disclosure, the external device 200 may transmit a plurality of IR signals to the electronic device 100 at predetermined intervals.

In an embodiment of the disclosure, the electronic device 100 may receive, from the external device 200, an IR signal having a type identification signal that is one of A1 to A5.

For example, in FIG. 7, it is assumed that the electronic device 100 sequentially receives a plurality of IR signals shown in a direction from top to bottom in FIG. 7. However, this is only an example, and an order in which the external device 200 transmits the plurality of IR signals or an order in which the electronic device 100 receives the IR signals from the external device 200 may be modified in various ways.

In an embodiment of the disclosure, the electronic device 100 may identify that network setup is initiated when receiving an IR signal having a type identification signal that is one of A1 to A5.

In an embodiment of the disclosure, the electronic device 100 may store all the IR signals received from the external device 200 until the electronic device 100 has received all IR signals having typical identification signals of A1 to A5.

In an embodiment of the disclosure, the electronic device 100 may store an IR signal by attaching detailed information corresponding to each type to prefix data for each type included in second network information.

In an embodiment of the disclosure, the electronic device 100 may obtain a type identification signal of A1 from the first byte of an IR signal received first among the plurality of IR signals shown in FIG. 7, and obtain detailed information of 5 from the second byte.

A1 may be an identification signal indicating an SSID. The detailed information of 5 transmitted with the type identification signal of A1 may refer, for example, to network information for the SSID identified by A1 being 5.

In an embodiment of the disclosure, the electronic device 100 may identify that the network information for the SSID is 5 according to the type identification signal obtained from the first network information included in the IR signal being A1 and the detailed information corresponding to A1 being 5.

In an embodiment of the disclosure, the electronic device 100 may read the second network information prestored in the electronic device 100. The second network information may include prefix data for each type.

In an embodiment of the disclosure, the second network information may include prefix data for at least one of the IP range, SSID information of the AP 300, channel information, or port range.

For example, in FIG. 7, the second network information is assumed to include prefix data for the IP range of 192.168.0, prefix data for the SSID information of the AP 300 as wififactory, prefix data for the channel information given as channel data for each channel index, and prefix data for the port range, e.g., a default port, as 5000.

In an embodiment of the disclosure, the electronic device 100 may identify, from the second network information, prefix data corresponding to a type of A1, which is the type identification signal obtained from the first network information, e.g., prefix data for the SSID.

In an embodiment of the disclosure, the electronic device 100 may add to wififactory the detailed information of 5 corresponding to the type of A1 obtained from the first network information, according to the prefix data for the SSID included in the second network information being wififactory, and use data wififactory5 as SSID information.

The electronic device 100 may receive from the external device 200 an IR signal including a type identification signal of A2 in a first byte and detailed information of 1 in a second byte.

A2 may be an identification signal indicating a channel index. The detailed information of 1 transmitted with A2 may refer, for example, to a channel index identified by A2 having a value of 1.

In an embodiment of the disclosure, the electronic device 100 may obtain prefix data for information identified by A2, e.g., channel information, from the second network information.

In an embodiment of the disclosure, the electronic device 100 may have a channel data table by channel index included in the second network information and prestored.

In an embodiment of the disclosure, the electronic device 100 may obtain prefix data corresponding to a type of A2 from the second network information. In an embodiment of the disclosure, the electronic device 100 may obtain channel data of 2417 as the channel information, which corresponds to the detailed information of 1 obtained from the first network information among channel data by channel index that is the prefix data corresponding to the type of A2.

The electronic device 100 may receive from the external device 200 an IR signal including a type identification signal of A3 in a first byte and detailed information of 2 in a second byte.

A3 is an identification signal indicating an external device IP, and the detailed information of 2 transmitted with A3 may indicate that network information for the external device IP identified by A3 is 2.

In an embodiment of the disclosure, the electronic device 100 may obtain, from the second network information, prefix data corresponding to a type of A3, which is the type identification signal obtained from the first network information, e.g., prefix data 192.168.0. for the external device IP, add the detailed information of 2 corresponding to the type of A3 to 192.168.0., and use 192.168.0.2 as IP information of the external device 200.

The electronic device 100 may receive from the external device 200 an IR signal including a type identification signal of A4 in a first byte and detailed information of 10 in a second byte.

A4 is an identification signal indicating an electronic device IP, and the detailed information of 10 transmitted with A4 may indicate that network information for the electronic device IP identified by A4 is 10.

In an embodiment of the disclosure, the electronic device 100 may obtain, from the second network information, prefix data corresponding to a type of A4, e.g., prefix data 192.168.0. for the electronic device IP, add the detailed information of 10 corresponding to the type of A4 to 192.168.0., and use 192.168.0.10 as IP information of the electronic device 100.

The electronic device 100 may receive from the external device 200 an IR signal including a type identification signal of A5 in a first byte and detailed information of 1 in a second byte.

A5 may be an identification signal indicating a port number. The detailed information of 1 transmitted with A5 may indicate that network information for the port number identified by A5 is 1.

In an embodiment of the disclosure, the electronic device 100 may obtain, from the second network information, prefix data corresponding to a type of A5, which is the type identification signal obtained from the first network information, e.g., a default port value of 5000, add the detailed information of 1 corresponding to the type of A5 to the default port value of 5000, and use 5001 as the port number.

In an embodiment of the disclosure, the electronic device 100 may generate network configuration information using the method described above.

In an embodiment of the disclosure, the electronic device 100 may generate SSID information, channel information, external device IP information, electronic device IP information, and a port number, respectively, by combining first network information with second network information according to a rule.

In an embodiment of the disclosure, the electronic device 100 may be connected to the external device 200 using the network configuration information.

In an embodiment of the disclosure, when the network connection with the electronic device 100 is completed, the external device 200 may stop transmitting an IR signal to the electronic device 100.

According to the various embodiments of the disclosure, the external device 200 may be connected to the electronic device 100 via the network based on a static IP address by including the electronic device IP information and port information in an IR signal and transmitting the IR signal to the electronic device 100.

According to the various embodiments of the disclosure, the electronic device 100 may generate network configuration information using first network information received from the external device 200 and prestored second network information together, and omit the DHCP process through an AP, thereby making a network connection faster and easier.

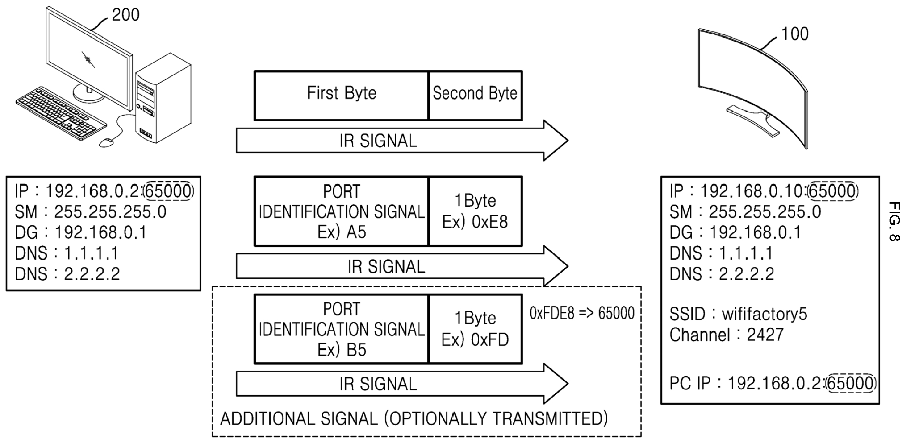

FIG. 8 is a diagram illustrating an example in which the electronic device 100 generates network configuration information by receiving an extended IR signal from the external device 200, according to various embodiments.

In an embodiment of the disclosure, the external device 200 may transmit to the electronic device 100 data that is outside a range mutually agreed upon with the electronic device 100.

For example, in a state where an IP range mutually agreed up between the external device 200 and the electronic device 100 is 192.168., the external device 200 may need to change the IP range and use a number in a third group of the IP address system, e.g., a third byte after 192.168.

A port may be changed, or the port may be divided into multiple ports and a multi-port may be used.

In an embodiment of the disclosure, the external device 200 may generate an extended IR signal to transmit, to the electronic device 100, data that is outside a range of prefix data mutually agreed upon with the electronic device 100.

In an embodiment of the disclosure, the external device 200 may use a type identification signal to indicate whether network information included in an IR signal is within a data range mutually agreed upon with the electronic device 100.

In an embodiment of the disclosure, the type identification signal may be one of a basic type identification signal and an extended type identification signal.

In an embodiment of the disclosure, a basic type identification signal may indicate that detailed information transmitted with the basic type identification signal is included in a data range mutually agreed upon by the electronic device 100 and the external device 200. For example, the type identification signals of A1 to A5 described with reference to FIG. 7 may be basic type identification signals.

In an embodiment of the disclosure, an IR signal including a basic type identification signal and corresponding detailed information may be referred to as a basic IR signal.

In an embodiment of the disclosure, when the electronic device 100 receives a basic IR signal, e.g., when a type identification signal included in first network information is a basic type identification signal, the electronic device 100 may generate network configuration information by combining detailed information corresponding to the basic type identification signal with prefix data for the same type included in the second network information.

In an embodiment of the disclosure, an IR signal including an extended type identification signal and corresponding detailed information may be referred to as an extended IR signal.

When the type identification signal is not one of A1 to A5, for example, when the type identification signal is one of B1 to B5, the type identification signal of one of B1 to B5 may be an extended type identification signal. Furthermore, an IR signal including the type identification signal of one of B1 to B5 may be an extended IR signal.

In an embodiment of the disclosure, when receiving an extended IR signal, the electronic device 100 may generate extended data using the extended IR signal in conjunction with a basic IR signal.

Referring to FIG. 8, the external device 200 transmitting an extended IR signal to the electronic device 100 when the external device 200 desires to change a port number from a pre-agreed range.

For example, it is assumed that that a port range mutually arranged upon between the external device 200 and the electronic device 100 is 5001 to 5255. It is also assumed that prefix data corresponding to the type of A5 included in the second network information is 5000 that is a default port value.

In an embodiment of the disclosure, the maximum amount of detailed information that the external device 200 is capable of transmitting to the electronic device 100 is 1 byte, and because 1 byte includes 8 bits, the detailed information may have one of values from 1 to 255. In this case, network configuration information for the port number generated from first network information and second network information may be in a range of 5001 to 5255, which is the default port value of 5000 plus one of the values of detailed information from 1 to 255.

In an embodiment of the disclosure, when the port number is changed to a value outside the range of 5001 to 5225, such as 65000, the external device 200 may generate an extended IR signal to inform the electronic device 100 of the port number outside the agreed range.

In an embodiment of the disclosure, the external device 200 may generate a basic IR signal and an extended IR signal, each including a type identification signal for the port number.

In an embodiment of the disclosure, the external device 200 may respectively include information about a lower byte in a basic IR signal containing a basic type identification signal for the port number and information about an upper byte in an extended IR signal containing an extended type identification signal for the port number, and transmit the basic IR signal and the extended IR signal to the electronic device 100.

In an embodiment of the disclosure, the external device 200 may transmit the basic IR signal first and then the extended IR signal, but the disclosure is not limited thereto, and the order in which the basic IR signal and the extended IR signal are transmitted may be changed.

In an embodiment of the disclosure, the electronic device 100 may receive both an extended IR signal and a basic IR signal from the external device 200.

In an embodiment of the disclosure, the electronic device 100 may receive from the external device 200 an IR signal including a basic type identification signal of A5 in a first byte and detailed information of 0xE8 in a second byte.

A5 may include an identification signal indicating the port number, and the detailed information of 0xE8 transmitted with A5 may indicate that network information for the port number identified by A5 is 0xE8.

In an embodiment of the disclosure, the electronic device 100 may receive from the external device 200 an extended IR signal including a type identification signal of B5 in a first byte and detailed information of 0xFD in a second byte.

In an embodiment of the disclosure, the electronic device 100 may identify that the IR signal is the extended IR signal because the IR signal includes the type identification signal of B5, which is an extended type identification signal.

In an embodiment of the disclosure, the electronic device 100 may identify a basic IR signal that includes a basic type identification signal indicating the same type as the extended type identification signal, and use the basic IR signal in conjunction with the extended IR signal.

In an embodiment of the disclosure, the electronic device 100 may use, in conjunction with the extended IR signal, a basic IR signal including the basic type identification signal of A5 indicating the same port number as the extended type identification signal of B5.

In an embodiment of the disclosure, there may be predetermined rules between the electronic device 100 and the external device 200 on how to use detailed information included in the extended IR signal and detailed information included in the basic IR signal to obtain extended data.

In an embodiment of the disclosure, the electronic device 100 may obtain extended data using the detailed information corresponding to the extended type identification signal, which is included in the extended IR signal, as an upper byte and the detailed information included in the basic IR signal as a lower byte.

For example, the electronic device 100 may obtain as extended data a value, e.g., 0xFDE8 (decimal number 65000), which includes the detailed information of 0xFD corresponding to the extended type identification signal, which is included in the extended IR signal, as an upper byte, and the detail information of 0xE8 included in the basic IR signal as a lower byte.

In an embodiment of the disclosure, the electronic device 100 may use the extended data of 65000 generated for the port number, together with other network configuration information. For example, the electronic device 100 may finally generate network configuration information using the SSID information, channel information, external device IP information, and electronic device IP information obtained according to the method described with reference to FIG. 7, together with the extended data for the port number obtained according to the method described above.

According to various embodiments of the disclosure, by transmitting and receiving data outside the mutually agreed range using an extended IR signal and utilizing the data, the external device 200 and the electronic device 100 may appropriately change and use network configuration information according to a changed environment.

According to an embodiment of the disclosure, the external device 200 and the electronic device 100 may appropriately change and use the network configuration information by generating and using an extended IR signal according to mutually agreed rules.

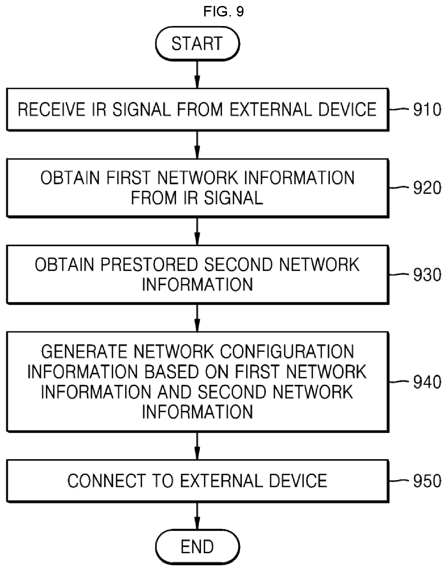

FIG. 9 is a flowchart illustrating an example method of operating the electronic device 100, according to various embodiments.

Referring to FIG. 9, in an embodiment of the disclosure, the electronic device 100 may receive an IR signal from the external device 200 (operation 910).

In an embodiment of the disclosure, the electronic device 100 may obtain first network information from the IR signal (operation 920).

In an embodiment of the disclosure, the IR signal may include a type identification signal and detailed information corresponding to the type identification signal as the first network information.

In an embodiment of the disclosure, the electronic device 100 may obtain prestored second network information (operation 930).

In an embodiment of the disclosure, the second network information may include prefix data for each type. In an embodiment of the disclosure, the second network information may include prefix data for at least one of an IP range, SSID information of an AP, channel information, or a port range.

In an embodiment of the disclosure, the electronic device 100 may generate network configuration information, based on the first network information and the second network information (operation 940).

In an embodiment of the disclosure, the electronic device 100 may generate network configuration information by combining detailed information corresponding to a type identification signal, which is included in the first network information, with prefix data for a type identified by the type identification signal , which is included in the second network information.

In an embodiment of the disclosure, the electronic device 100 may be connected to the external device 200 using the network configuration information (operation 950).

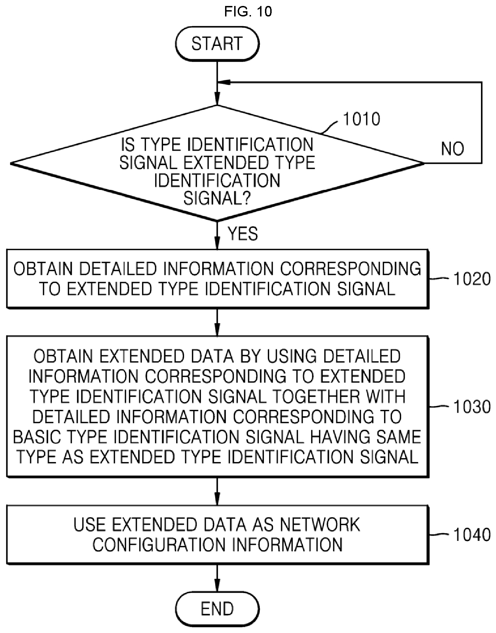

FIG. 10 is a flowchart illustrating an example method of operating the electronic device 100, according to various embodiments.

Referring to FIG. 10, in an embodiment of the disclosure, the electronic device 100 may receive an IR signal from the external device 200.

In an embodiment of the disclosure, the electronic device 100 may obtain first network information from the IR signal. In an embodiment of the disclosure, the first network information may include a type identification signal and detailed information.

In an embodiment of the disclosure, the type identification signal may be one of a basic type identification signal and an extended type identification signal.

In an embodiment of the disclosure, a basic type identification signal may indicate that detailed information transmitted with the basic type identification signal is included in a data range mutually agreed upon by the electronic device 100 and the external device 200.

In an embodiment of the disclosure, an extended type identification signal may indicate that detailed information transmitted with the extended type identification signal is outside a data range mutually agreed upon by the electronic device 100 and the external device 200.

In an embodiment of the disclosure, the electronic device 100 may determine whether the type identification signal is an extended type identification signal (operation 1010).

In an embodiment of the disclosure, when determining that the type identification signal is an extended type identification signal (yes in operation 1010), the electronic device 100 may obtain detailed information corresponding to the extended type identification signal (operation 1020).

In an embodiment of the disclosure, the electronic device 100 may obtain extended data using the detailed information corresponding to the extended type identification signal, together with detailed information corresponding to a basic type identification signal of the same type as the extended type identification signal (operation 1030).

For example, the electronic device 100 may obtain extended data using the detailed information corresponding to the extended type identification signal as an upper byte and the detailed information corresponding to the basic type identification signal as a lower byte.

In an embodiment of the disclosure, the electronic device 100 may use the extended data as network configuration information (operation 1040).

In an embodiment of the disclosure, the electronic device 100 may be connected to the external device 200 via a network using the extension data and other network configuration information obtained using the first network information and the second network information together.

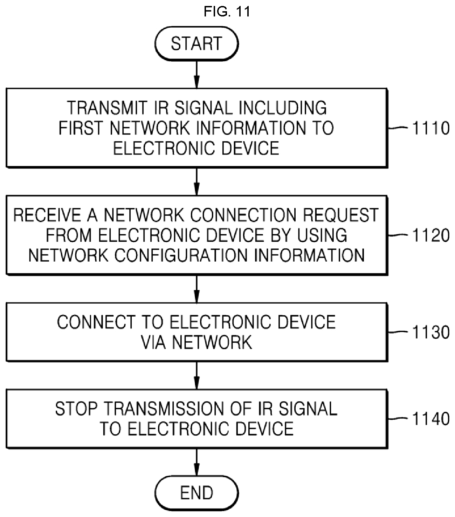

FIG. 11 is a flowchart illustrating an example method of operating the external device 200, according to various embodiments.

Referring to FIG. 11, the external device 200 may transmit an IR signal including first network information to the electronic device 100 (operation 1110).

In an embodiment of the disclosure, the external device 200 may include a type identification signal in a first byte of command data of the IR signal and detailed information corresponding to the type identification signal in a second byte, and transmit the IR signal to the electronic device 100.

In an embodiment of the disclosure, the external device 200 may receive a network connection request from the electronic device 100.

In an embodiment of the disclosure, the external device 200 may receive a network connection request from the electronic device 100 using network configuration information (operation 1120).

In an embodiment of the disclosure, the external device 200 may be connected to the electronic device 100 via a network in response to the network connection request from the electronic device 100 (operation 1130).

In an embodiment of the disclosure, the external device 200 may stop transmitting an IR signal to the electronic device 100 after being connected to the electronic device 100 (operation 1140).

In an embodiment of the disclosure, the external device 200 may communicate with the electronic device 100 through Wi-Fi communication.

An electronic device, an external device, and operation methods of the electronic device and the external device according to various embodiments of the disclosure may be implemented in the form of recording media including instructions executable by a computer, such as a program module executed by the computer. The computer-readable recording media may be any available media that are accessible by the computer, and include both volatile and non-volatile media and both removable and non-removable media. Furthermore, the computer-readable recording media may include computer storage media and communication media. The computer storage media include both volatile and non-volatile and both removable and non-removable media implemented using any method or technology for storage of information, such as computer-readable instructions, data structures, program modules, or other data. The communication media typically embody computer-readable instructions, data structures, program modules, other data in a modulated data signal such as a carrier wave, or other transmission mechanism, and include any information transmission media.

An electronic device and operation method thereof according to an embodiment of the disclosure may be embodied in a computer-readable recording/storage medium having recorded thereon a program for implementing the operation method of the electronic device, which includes receiving an IR signal from an external device, obtaining first network information from the IR signal, generating network configuration information based on the first network information and second network information prestored in the electronic device, and connecting with the external device via a network using the network configuration information.

A machine-readable storage medium may be provided in the form of a non-transitory storage medium. In this regard, the 'non-transitory' storage medium may not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment of the disclosure, methods according to various embodiments of the disclosure set forth herein may be included in a computer program electronic device when provided. The computer program electronic device may be traded, as a product, between a seller and a buyer. For example, the computer program electronic device may be distributed in the form of a machine-readable storage medium (e.g., a compact disc ROM (CD-ROM) or distributed (e.g., downloaded or uploaded) online via an application store or directly between two user devices (e.g., smartphones). For online distribution, at least a part of the computer program electronic device (e.g., a downloadable app) may be at least transiently stored or temporally created on a machine-readable storage medium such as a server of a manufacturer, a server of an application store, or a memory of a relay server.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device (100) comprising:
a communication unit (130) comprising communication circuitry;
a memory (120) storing at least one instruction; and
at least one processor (110), comprising processing circuitry, individually and/or collectively, configured to execute the at least one instruction stored in the memory and to cause the electronic device to:
receive an infrared (IR) signal from an external device (200) via the communication unit,
obtain first network information from the IR signal,
generate network configuration information based on the first network information and second network information stored in the electronic device, and
connect the electronic device to the external device via a network using the network configuration information.

2. The electronic device of claim 1, wherein
the first network information comprises a type identification signal and detailed information corresponding to the type identification signal, and
the type identification signal identifies at least one of a service set identifier (SSID), a channel index, an external device Internet Protocol (IP) address, an electronic device IP address, or a port number.

3. The electronic device of claim 2, wherein the second network information comprises prefix data for each type, and
at least one processor, individually and/or collectively, is configured to combine the detailed information corresponding to the type identification signal included in the first network information with prefix data for a type identified by the type identification signal, included in the second network information.

4. The electronic device of any one of claims 1 to 3, wherein the second network information includes information shared with the external device and comprises information about at least one of an IP range, SSID information of an access point (AP), channel information, or a port range.

5. The electronic device of any one of claims 1 to 4, wherein
the network configuration information comprises an IP address, and
at least one processor, individually and/or collectively, is configured to connect the electronic device to the network based on a static IP address using the network configuration information.

6. The electronic device of any one of claims 1 to 5, wherein
at least one processor, individually and/or collectively, is configured to:
identify whether the type identification signal obtained from the IR signal is an extended type identification signal or a basic type identification signal, and
based on the type identification signal being an extended type identification signal, obtain extended data based on detailed information corresponding to the extended type identification signal and detailed information corresponding to a basic type identification signal of a same type as the extended type identification signal.

7. The electronic device of claim 6, wherein at least one processor, individually and/or collectively, is configured to generate the network configuration information using the extended data.

8. An external device (200) comprising:
a communication unit (230) comprising communication circuitry;
a memory (220) storing at least one instruction; and
at least one processor (210), comprising processing circuitry, individually and/or collectively, configured to execute the at least one instruction stored in the memory and to cause the external device to:
transmit an infrared (IR) signal including first network information to an electronic device (100),
the first network information including a type identification signal and detailed information corresponding to the type identification signal, and
connect the external device to the electronic device via a network in response to the electronic device requesting a network connection using network configuration information generated based on the first network information and second network information stored in the electronic device,
wherein the network configuration information comprises an Internet Protocol (IP) address of the electronic device.

9. The external device of claim 8, wherein
the external device and the electronic device are configured to share the second network information, and
the second network information comprises at least one of an IP range, service set identifier (SSID) information of an access point (AP), channel information, or a port range.

10. The external device of claim 8, wherein the external device is connected to an access point (AP),
wherein at least one processor, individually and/or collectively, is configured to control the AP to exclude an IP range from a Dynamic Host Configuration Protocol (DHCP) area.

11. A method of operating an electronic device, the method comprising:
receiving an infrared (IR) signal from an external device;
obtaining first network information from the IR signal;
generating network configuration information based on the first network information and second network information prestored in the electronic device; and
connecting to the external device via a network using the network configuration information.

12. The method of claim 11, wherein
the first network information comprises a type identification signal and detailed information corresponding to the type identification signal, and
the type identification signal identifies at least one of a service set identifier (SSID), a channel index, an external device Internet Protocol (IP) address, an electronic device IP address, or a port number.

13. The method of claim 12, wherein
the second network information comprises prefix data for each type, and
the generating of the network configuration information comprises combining the detailed information corresponding to the type identification signal included in the first network information with prefix data for a type identified by the type identification signal, included in the second network information.

14. The method of any one of claims 11 to 13, wherein the second network information includes information shared with the external device and comprises information about at least one of an IP range, SSID information of an access point (AP), channel information, or a port range.

15. The operation method of any one of claims 11 to 14, wherein
the network configuration information comprises an IP address, and
the connecting to the external device via the network comprises connecting to the network based on a static IP address using the network configuration information.
